# EUROPEAN PATENT APPLICATION

(11) **EP 1 970 926 A1**
(43) Date of publication of application: **17.09.2008**
(21) Application number: 07013415.0
(22) Date of filing: 09.07.2007
(51) Int. Cl.: H01G 4/38, H01G 9/08, H01G 9/26

(54) **Capacitor module**

(30) Priority: 13.03.2007 DE 102007012098
(71) Applicant: Matsushita Electric Industrial Co., Ltd., Kadoma City Osaka 571-8501 (JP)
(72) Inventor: Meincke, Steffen, 21442 Toppenstedt (DE); Bogdan, Holger, 29574 Ebstorf (DE); Glapa, Norbert, 21339 Lüneburg (DE); Dr. Dodt, Thomas, 31655 Stadthagen (DE)
(74) Representative: UEXKÜLL & STOLBERG

(57) **Abstract**

The present invention relates to a capacitor module having at least two capacitor cells (10, 20; 40) of the same type of cells, which cells being provided at one of their rear and front faces with an over-pressure valve for electrolyte contained within said cells, and which cells are electrically connected to each other and arranged in a substantially horizontal orientation within said capacitor module when in its operating position. By using merely one type of cells, the manufacturing costs can be substantially reduced. In case of a series connection of the capacitor cells (10, 20; 40), simple connection of the capacitor cells at the opposed faces thereof is possible. Therefore, as the cells are arranged in a substantially horizontal orientation, inadvertent leackage of electrolyte out of the over-pressure valves is prevented. By means of different additional features, sufficient cooling of the capacitor module is guaranteed.

## Description

The present invention relates in general to a capacitor module comprising a plurality of capacitors.

Such a capacitor module is disclosed, for example, in DE 10 2004 045 182 A1. The capacitor module described in this application comprises in general cup-shaped module housing and a plurality of capacitors arranged within said module housing wherein a two adjacent arranged capacitors are spaced apart from each other with a distance, and the module housing is sealed against the environment. By these features, the capacitors are protected against environmental conditions, and the heat dissipation within the housing is improved. Further, it is prevented that electrolyte contained in the capacitors will leak out in the environment in case of damage of one of the capacitors.

From DE 10 2004 035 810 A1, a capacitor module comprising a plurality of capacitors is known, which capacitors are arranged within a housing, wherein a heat contact surface in contact with at least one of the capacitors is connected to a surface of the housing via a medium. Thus, dissipation of heat to the environment is improved.

Capacitors for such capacitor modules generally require an over-pressure valve or vent valve, so that gas produced in case of excessive heat generation, can be discharged in controlled manner to prevent damage of the capacitor which could be dangerous for the environment. As such valve is usually arranged at one of the two faces (front or rear surface) of the capacitor, it is important when mounting the capacitors into the capacitor module that none of these faces provided with such a valve is arranged at the bottom of the module, as in such a case there is a risk that electrolyte is leaking out of said valve.

To be able to realize simple electrical contacts between side-by-side arranged capacitors in a series connection at the adjacent located faces of the capacitors, two different types of capacitors ("types of cells") are manufactured, i.e., types of cells, in which those faces being provided with said over-pressure valve either comprise a positive electrode or a negative electrode (screw electrode). For series connection of a plurality of capacitors, such capacitors of different types of cells are arranged adjacent to each other, and these different types of capacitors are welded at their bottom sites to the module in an upright position. Therefore, the over-pressure valves (as well as the alternating positive and negative electrodes) are positioned at the top sites thereof. In case of a parallel connection, it is obvious that capacitors of only one type of cells are required.

It is an object of the present invention, to alleviate the above mentioned disadvantages and to provide a cost-effective capacitor module.

This object is achieved by capacitor module as defined in claim 1, which capacitor module comprising at least two capacitors of the same type of cells, which are arranged within the module in an operating position or mounting position of the module in a substantially horizontal orientation and which are electrically connected to each other.

By means of this arrangement and orientation of the capacitors, the costs for production and manufacturing of the capacitor modules of the present invention are reduced, as merely one type of capacitor cells is required, without the necessity that in case of a series connection of the capacitor cells, one of at least two capacitor cells is arranged in such an orientation that the face being provided with the over-pressure valve is positioned at the bottom of the module.

As the capacitors are mounted or arranged in a horizontal or at least substantially horizontal position within the capacitor module, is possible to arrange the capacitors cells adjacent to each other in alternating orientations, without any risk that electrolyte is leaking out of one of the capacitor cells over-pressure valves. In case of a series connection, the above mention advantage of easily connecting the cells is still maintained.

Preferred embodiments of the capacitor module are set out in the depended claims.

The invention and details, features and advantages thereof will in the following be described in connection with different, non-limiting embodiments shown in the drawings, in which:
- Figure 1: shows an exploded view of first embodiment of the present invention;
- Figure 2: show a three-dimensional view of the capacitor module according to a first embodiment of the present invention;
- Figure 3: shows different views of the capacitor module of Figure 2;
- Figure 4: shows an exploded view of a second embodiment of the present invention;
- Figure 5: shows a three-dimensional view of the capacitor module according to the second embodiment of the present invention; and
- Figure 6: shows different views of the capacitor module of Figure 5.

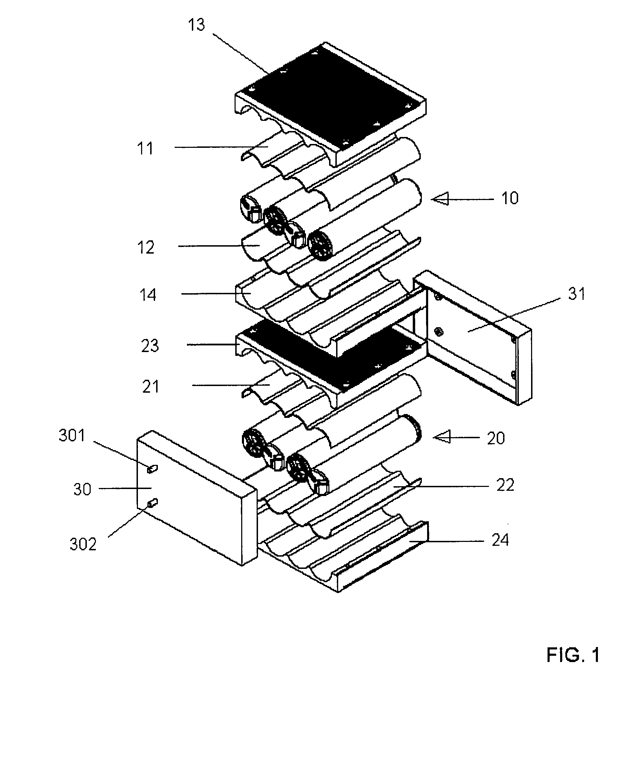

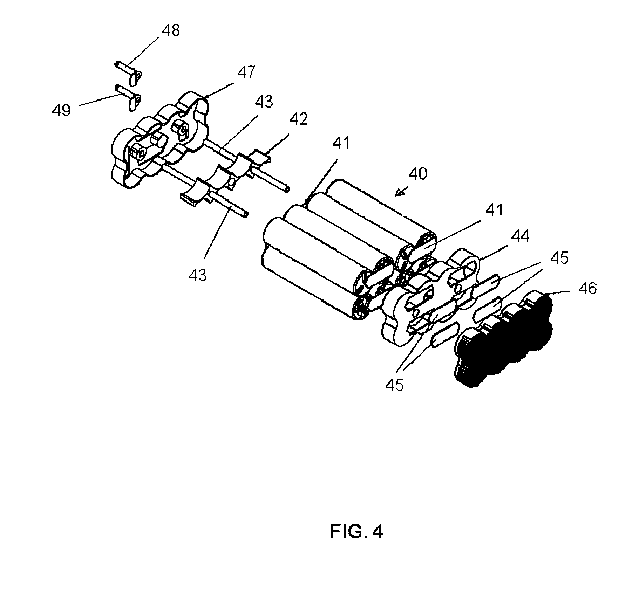

The first embodiment of the present invention which is shown in Figures 1 to 3 provides the special advantage that a substantially improved heat dissipation and cooling of the capacitor cells via the cylindrical housing (enclosure) thereof is obtained, whereas the second embodiment shown in Figures 4 to 6 provides the special advantage that heat is dissipated via the rear and front faces of the capacitor cells and the capacitor module, respectively.

A common preferred feature of both embodiments is the configuration of the capacitor modules comprising a plurality of capacitor cells in sandwich-technique or sandwich-arrangement, wherein the individual capacitor cells are arranged in adjacent to each other and in tightly fitting configuration to provide optimum heat dissipation. This sandwich-arrangement can be realized independently from the materials used for the capacitor cells.

As already mentioned above, the capacitors preferably are of the same type of cells which are each provided with an over-pressure valve or vent valve at their front face. In general, the positive electrode of the capacitor cells is also provided at said front face, whereas the negative electrode for contacting and connecting the cells is provided at the opposite rear face.

The sandwich-arrangement is best shown in Figure 1. The first embodiment of the capacitor module shown in Figure 1 comprises a first group of capacitor cells 10 and a second group of capacitor cells 20 (preferably so called EDLC (electrochemical double layer capacitor) cells) wherein each of said groups comprises four individual capacitor cells 10, 20, for example, preferably each of the same type of cells. The capacitor cells 10, 20 are connected in series, and for electrical connection of the cells to each other at the adjacent arranged faces, the capacitor cells are arranged in alternating orientation in lengthwise direction.

Alternatively, the individual capacitor cells 10, 20 may have the same orientation and are connected in parallel.

Depending on the desired number of capacitor cells 10, 20 within the capacitor module, both capacitor groups may comprise a different number of capacitor cells 10, 20 (for example three or five of more cells), and/or more than two capacitor groups may be are arranged one above the other and/or adjacent to each other, in a manner as shown in Figure 1.

At both surfaces in longitudinal direction of both capacitor groups, i.e., the surfaces of the cylindrical housing of the capacitor cells 10, 20, first and second heat conducting and electrically isolating layers are provided, preferably in the form of isolating sheets 11, 12; 21, 22, which are arranged in direct contact to said surfaces. The isolating sheets 11, 12; 21, 22 have a profile, in case they are not made of flexible material, that corresponds to the profile of the contact surface of capacitor groups and the capacitor cells, respectively.

The capacitor groups and the isolating sheets 11, 12; 21, 22 arranged adjacent to and in contact with the capacitor groups and capacitor cells, respectively, are each received or arranged between first and second receiving profiles 13, 14; 23, 24, the inner surface of the receiving profiles or plates has a configuration or shape that corresponds to the shape of the surface of the capacitor groups and the corresponding shape of the surface of the isolating sheets 11, 12; 21, 22, respectively.

The sandwich-structure comprising at least two capacitor groups which are each arranged or received at both opposed longitudinal sides between said isolating sheets 11, 12; 21, 22 and said receiving profiles 13, 14; 23, 24, is closed or covered in the assembled state at both faces (front and rear faces) of the sandwich-structure by means of first and second cover member 30, 31 wherein the first cover member 30 is provided with a first and a second terminal contact pins 301, 302, and wherein a first contact pin is connected to the positive poles of the individual capacitor cells and the second contact pin is connected to the negative poles of the individual capacitor cells of the capacitor group. By means of the first and second contact pins 301, 302, the capacitor module can be connected to other electrical devices.

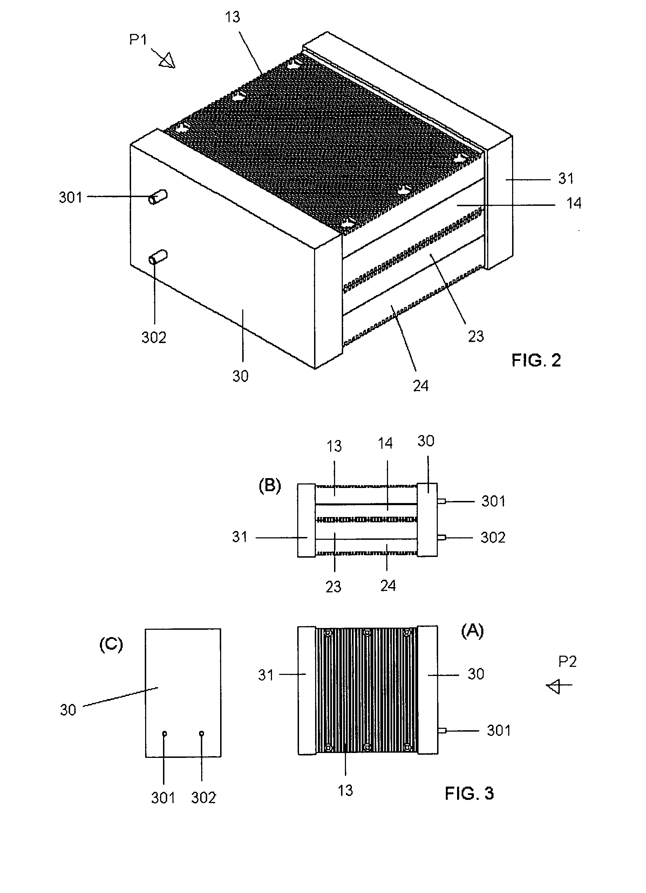

Figure 2 shows a three-dimensional view of the capacitor module in assembled configuration. In this configuration, merely the receiving profiles 13, 14; 23, 24 of the first and second capacitor groups can be seen, which are covered by means of the first and second cover members 30, 31. Further, the terminal contact pins 301, 302 for connecting the capacitor module to other electrical devices are shown at the first cover member 30.

Figures 3A to 3C show three different views of the capacitor module of Figure 2 from different directions.

Figure 3A shows a top view of the first receiving profile 13 of the first capacitor group as well as the first and second cover members 30, 31, wherein one of the two terminal pins 301 can be seen at the first cover member 30.

Figure 3B shows a side view of the rear surface of the capacitor module of Figure 2 as indicated by arrow P1 in Figure 2. In Figure 3B, the four receiving profiles 13, 14; 23, 24 of both capacitor groups and the first and second cover members 30, 31 together with the first and second terminal contact pins 301, 302 at the first cover member 30 can be seen.

Figure 3C shows a top view of the first cover member 30 as indicated by arrow P2 in Figure 3A together with both terminal contact pins 301, 302.

Metal or another heat conducting materials is selected as material for the receiving profiles 13, 14; 23, 24 and for both cover members 30, 31, to guarantee a very good heat transfer and sufficient heat dissipation from the capacitor module.

Figure 4 shows an exploded view of a second embodiment of the capacitor module of the present invention. The capacitor module of the second embodiment comprises a group of capacitor cells 40, which are arranged in two rows, each row having four capacitor cells 40 which are arranged adjacent to each other and preferably in tightly fitting contact with each other. Also in this example, all capacitor cells are preferably of the same type of cells and are provided with an over-pressure valve at their front faces, as described above.

The capacitor cells 40 are, as described in connection with the first embodiment, arranged in longitudinal direction in alternating orientation, and are connected in series, wherein individual capacitor cells 40 may also be oriented in the same direction and connected to each other in parallel, if necessary. Further, the number of capacitors 40 is selected as required.

The capacitors 40 are electrically connected at both faces, i.e. at the electrical contacts, by means of electrical connectors 41. The configuration of the connectors depends on the capacitor arrangement, i.e. series connection and/or parallel connection.

Further, both faces (i.e. the front and rear faces) of the capacitor group are received within and covered by first and second support members 44, 47, which serve as mechanical support of the capacitor cells 40. At one of the support members 47, first and second terminal contact pins 48, 49 are provided for electrical connection of the series (or parallel) connection of the capacitor cells and, therefore, of the capacitor module to other electrical devices.

To improve support the capacitor cells 40, an additional separator member 42 is provided which is arranged between two capacitor rows (capacitor groups) and supported by means of two rods 43 which extend between both support members 44, 47 and being attached thereto.

For cooling of the capacitor module, a cooling element 46 is arranged at the face of the capacitor module opposite to the terminal contact pins 48, 49, which cooling element 46 is preferably coupled to the respective support member 44 by means of a plurality of heat conducting and electrically isolating plates 45 to improve heat dissipation.

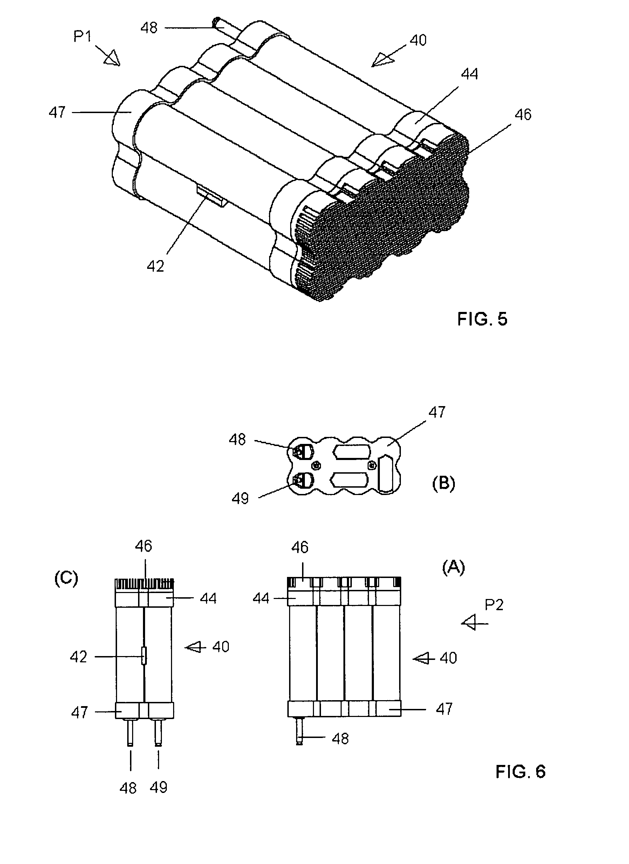

Figure 5 shoes a three-dimensional view of the second embodiment of the capacitor module of Figure 4 after assembly. In this assembled configuration, the capacitor cells 40 are arranged in two rows, each comprising four individual capacitor cells 40. It is noted that the capacitor module may also comprise a different number of rows and capacitor cells per row. Further, Figure 5 shows the first and second support members 44, 47 at the front and rear faces of the capacitor groups. Finally, one of both terminal contact pins 48 attached to the rear support member 47, and a part of the separator member 42 between the two rows of capacitor cells 40 can be seen. Finally, the cooling element 46 coupled to the front support member 44 is illustrated.

Figures 6A to 6C show three different views of the capacitor module of Figure 5 from different directions.

Figure 6A shows a top view of the capacitor module, in which the capacitor cells 40, the first and second support members 44, 47, the cooling element 46 coupled to the first support member 44 and one of the terminal contact pins 48 attached to the second support member 47 are shown.

Figure 6B shows the front view of "contact" face of the capacitor module as indicated by arrow P1 in Figure 5, in which the second support member 47 and both terminal contact pins 48, 49 are shown.

Finally, Figure 6C shows a side view of the capacitor module as indicated by arrow P2 in Figure 6A in which the capacitor cells 40 are arranged in two rows. Further, the separator member 42 and the first support member 44 together with the cooling element 46 and the second support member 47 together with both terminal contact pins 48, 49 can be seen.

Preferably, an electrically non-conductive material with very good heat conducting properties is selected as material for both support members 44, 47 to obtain a sufficient heat transfer and excellent cooling and heat dissipation properties from the capacitor module.

## Claims

1. Capacitor module comprising at least two capacitor cells (10; 20; 40) of the same type of cells which are arranged within the capacitor module in a substantially horizontal orientation when said module is oriented in the operating position thereof, and which are electrically connected to each other.

2. Capacitor module according to claim 1, wherein said capacitor cells (10; 20; 40) are mounted within said capacitor module in adjacent arrangement.

3. Capacitor module according to claim 1, wherein said capacitor cells (10; 20; 40) are arranged within said capacitor module adjacent to one another in a substantially horizontal plane when the module is oriented in the operating position thereof.

4. Capacitor module according to claim 3, wherein said capacitor cells (10; 20; 40) which are arranged as a group of cells within a substantially horizontal plane, are received between first and second receiving profiles (13, 14; 23, 24) provided below and above said group of capacitor cells (10; 20; 40).

5. Capacitor module according to claim 4, wherein heat conductive sheets (11, 12; 21, 22) are provided between said group of capacitor cells (10; 20; 40) and said receiving profiles (13, 14; 23, 24).

6. Capacitor module according to claim 5, wherein said heat conductive sheets (11, 12; 21, 22) are electrically isolating.

7. Capacitor module according to claim 4, wherein the front and rear faces of the adjacent arranged capacitor cells (10, 20) are covered by means of first and second cover members (30, 31).

8. Capacitor module according to claim 7, wherein terminal contact pins (301, 302) are provided at one of said cover members (30) for connecting to said capacitor cells of said capacitor module.

9. Capacitor module according to claim 3, wherein said capacitor cells (40) are fixed to each other by means of first and second support members (44, 47) arranged at the opposed front and rear faces thereof.

10. Capacitor module according to claim 9, wherein a cooling element (46) is coupled to the first support member (44).

11. Capacitor module according to claim 9, wherein terminal contact pins (48, 49) for connecting to said capacitor cells of said capacitor module are provided at the second support member (47).

12. Capacitor module according to claim 10, wherein a plurality of heat conducting and electrically isolating plates (45) are disposed between the first support member (44) and the cooling element (46).

13. Capacitor module according to claim 9, wherein said capacitor cells (40) are arranged within at least two planes one above the other, wherein between said planes a separator member (42) is arranged, which separator member is secured to and between said first and second support members (44, 47) by means of rods (43).
